# EUROPEAN PATENT APPLICATION

(11) **EP 4 715 176 A1**
(43) Date of publication of application: **25.03.2026**
(21) Application number: 25204051.4
(22) Date of filing: 23.09.2025
(51) Int. Cl.: F02B 31/06, F02B 31/08

(54) **LAND VEHICLE WITH AN ENGINE COMPRISING AN AIR INTAKE DUCT PROVIDED WITH A DEVICE FOR SELECTIVELY GENERATING AN AIR TUMBLE IN THE COMBUSTION CHAMBER**

(30) Priority: 24.09.2024 IT 202400021268
(71) Applicant: FERRARI S.p.A., 41100 Modena (IT)
(72) Inventor: FODERARO, Antonio, 41100 MODENA (IT); PALTRINIERI, Stefano, 41100 MODENA (IT)
(74) Representative: Studio Torta S.p.A.

(57) **Abstract**

A road vehicle (1) with an endothermic engine (2) comprising an air intake duct (3) for introducing air into at least one combustion chamber (4); wherein there is provided in the air intake duct a device (5) for selectively generating a tumble of air in the combustion chamber; wherein the device for selectively generating a tumble consists of a single fin (6) arranged within the air intake duct; in which the fin (6) is shaped as a corresponding portion of the inner surface of the intake duct (3) and is movable between a rest position, in which it is substantially entirely in contact with the corresponding portion of the inner surface of the intake duct (3) and does not interfere with the flow of air passing through the intake duct, and a plurality of working positions in which it progressively penetrates the intake duct to convey the flow of air passing through only at a portion of the intake duct.

## Description

### Cross-Reference to Related Applications

This patent application claims priority from Italian patent application no. 102024000021268 filed on September 24, 2024, the entire disclosure of which is incorporated herein by reference.

### Technical Field of the Invention

The technical field of this invention is that of road vehicles equipped with an endothermic engine. However, this invention does not exclude the possibility of the vehicle also being equipped with other types of propulsion, such as an electric motor for creating a hybrid vehicle. In this context, this invention addresses the problem of how to improve the combustion efficiency of the endothermic engine in order to minimise pollutant emissions and particulate formation.

### State Of The Art

As is well known, in vehicles equipped with an endothermic engine, forward movement is generated by the explosion of a mixture of air and fuel (for example, petrol) in cylinders in which moving pistons are housed. The technology associated with this type of engine is well known to the person skilled in the art without providing additional details.

It is equally well known that in such engines, combustion efficiency in terms of reducing pollutant emissions and the particulate formation is linked to how well the air is mixed with the fuel entering the combustion chamber. In fact, the greater the mixing between air and fuel, the lower the emission of pollutants and the formation of particulates.

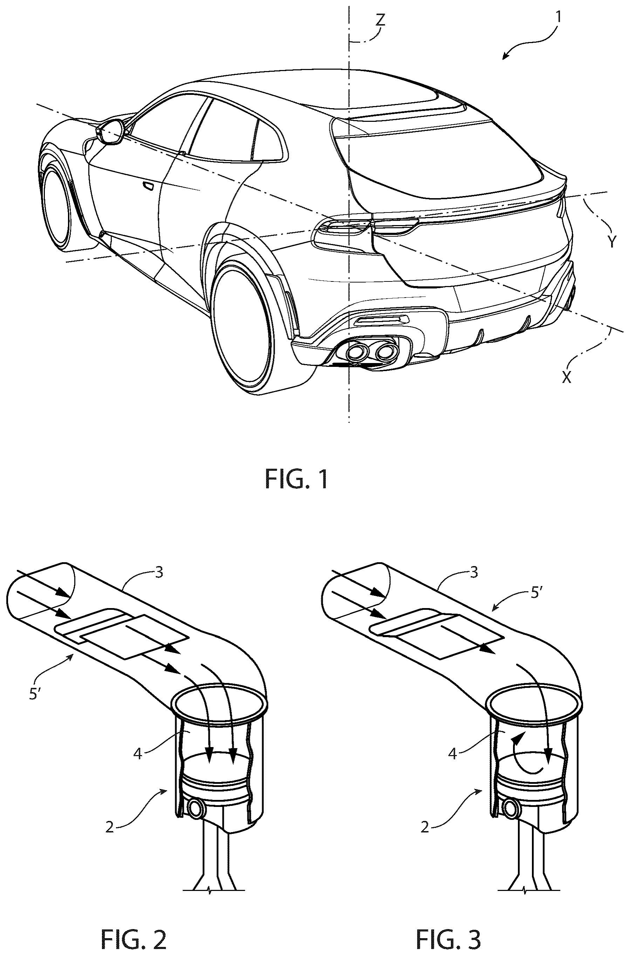

In this context, it is known to equip the air intake ducts, that is, the ducts that direct the flow of air towards the combustion chamber, with special devices immediately downstream of the combustion chamber that are capable of operating when required to facilitate the generation of air vortices entering the combustion chamber. These devices (known as tumble flaps) are activated at low revs and the purpose of the vortices created is precisely to ensure good mixing between air and fuel even under these conditions. To clarify the prior art just described, reference can be made to the attached Figures 2 and 3, which will be described below.

### Subject and Summary of the Invention

Starting from the prior art described above, and exemplified in Figures 2 and 3, the purpose of this invention is to provide an innovative "tumble flap", that is, an innovative device acting in the air intake duct to act when required (low speeds) on the air flow to generate a vortex of air entering the combustion chamber. As will become apparent, the advantages of this invention, both in general terms and in terms of the embodiment shown in the figures, are manifold, such as having essentially no impact on the flow at high speeds (substantially retractable device) and providing multiple operating positions (not ON-OFF) to optimise the vortex created at multiple speeds.

According to this invention, the above-mentioned purposes are achieved providing a road vehicle as claimed in the attached claims.

In particular, according to the most general definition of this invention, a road vehicle is provided which has at least one endothermic engine comprising at least one air intake duct to introduce air into at least one corresponding combustion chamber (that is, as is known, a cylinder in which the piston moved by the explosion of the air/fuel mixture is housed). A device ("tumble flap device") is provided in the intake duct to selectively generate an air vortex in the combustion chamber. "Selectively" means that it can be actuated when desired or automatic actuation is provided and, in any case, a return to the rest position pending the next use. In this context, according to this invention, the device for selectively generating the vortex consists of a single fin (not two fins, one movable and one fixed as in the prior art) arranged within the intake duct; wherein:
- the fin is shaped like a corresponding portion of the inner surface of the intake duct so that, in the rest position, it is essentially entirely in contact with the corresponding portion of the inner surface of the intake duct and does not interfere with the flow of air passing through the intake duct (in other words, in the rest position the fin is retracted) ;
- the fin is movable from the above-mentioned retracted rest position to multiple working positions in which it progressively penetrates the intake duct to convey the flow of air only passing through a portion of the intake duct (in other words, the fin, when raised, acts as a bulkhead or chute to convey air only through a portion of the intake duct's through section).

Thus, the fin is shaped like a chute and comprises a first end facing the combustion chamber and a second, opposite end. In the rest position, both ends (and the entire fin, therefore) are in contact with the corresponding portion of the inner surface of the intake duct, while in the working positions the first end is raised to be inside the intake duct. The second end remains essentially in contact with the corresponding portion of the inner surface of the intake duct even when the first end is raised. The motion of the fin can therefore be one of rotation around the second end or, preferably and as shown in the figures, of rototranslation, wherein in the raised position the fin is also moved towards the combustion chamber so as to generate the vortex just before the combustion chamber. A retracted rest position allows the fin to be kept in a lower temperature zone.

In the rest condition, the fin is preferably resting on the lower surface of the duct, while in the working position the first end of the fin is raised in such a way that the air flow is only directed to an upper portion of the intake duct and thus generates a vortex by dropping into the combustion chamber.

The motion of the fin is preferably generated by a connecting rod-crank mechanism, and, for this purpose, two pins are provided laterally on opposite sides housed in corresponding slots in the duct. The motion of the pins in the slots is driven by two cranks having a first end coupled to the pins and a second end coupled to a common pivot shaft with an axis parallel to the axis of the pins so that the rotation of the shaft generates the motion of the fin between the rest and working positions.

There is, preferably, an external lining sleeve of the intake duct, so as to prevent air leakage, at the cranks and pins.

Finally, according to a preferred embodiment of the invention, a single fin connected with two combustion chambers may be provided. In this example, two combustion chambers connected to the inlet duct may be provided, where basically upstream of the combustion chambers the inlet duct comprises a bifurcation to split into two independent channels connected to the combustion chambers. In this example, the first end of the fin comprises a corresponding bifurcation so that in the working positions the same fin acts at the bifurcation of the intake duct on the flows passing through both channels.

### Brief Description of the Drawings

In order to better understand this invention, a number of non-limiting embodiments thereof will now be described by way of example with reference to the attached drawings, in which:
- Figure 1 is a schematic view of a road vehicle;
- Figures 2 and 3 show a solution according to the prior art for generating an air vortex entering the engine combustion chamber;
- Figures 4-9 show a solution according to this invention of a retractable tumble flap device with a single fin for generating an air vortex entering the engine combustion chamber; Figures 4-6 in the rest position and Figures 7-9 in a working position, respectively;
- Figures 10 and 11 show an example of a mechanism for implementing the motion of the device in Figures 4-9.

### Preferred Embodiments of the Invention

Figure 1 is a schematic view of a road vehicle with a roll axis X, pitch axis Y and yaw axis Z that can be improved according to this invention. To this end, although not visible, the vehicle 1 comprises an endothermic engine.
Figures 2 and 3 show a solution according to the prior art for generating an air vortex entering the engine combustion chamber. In fact, as is well known, at low speeds it is preferable to have a device 5' operating in the intake ducts 3 to generate a vortex of air entering the combustion chamber 4 of the engine 2 (in this example, the cylinder head 4 housing the piston). According to the prior art of Figures 2 and 3, the device 5' comprises two fins, a fixed one arranged at the centreline of the duct to divide the duct into two lower and upper halves, and a movable fin that, in the rest position, does not cooperate with the fixed fin (and both the lower and upper air passage sections are open), and a working position in which the front end of the movable fin touches the rear edge of the fixed fin so as to close the lower passage section and convey the flow only into the upper section. Thus, the prior art provides two fins and works with an ON-OFF dynamic.

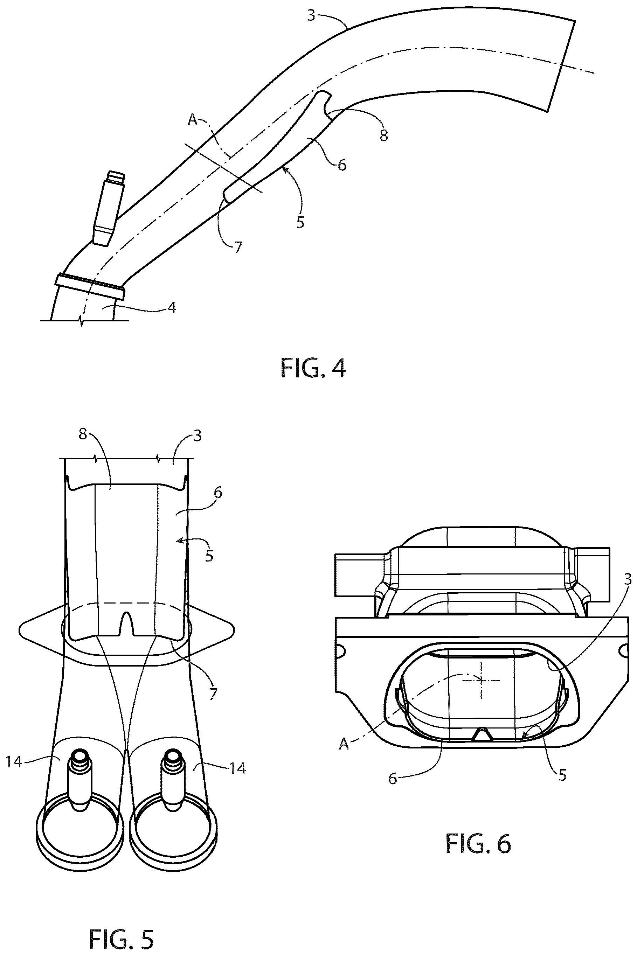

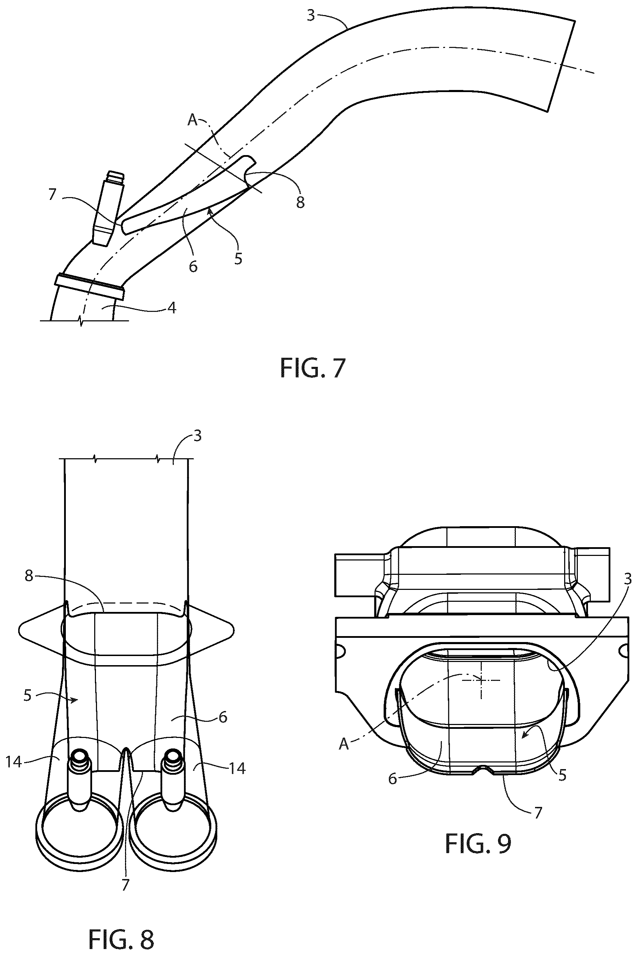

Figures 4-9 show a solution according to this invention, that is a retractable tumble flap device with a single fin for generating an air vortex entering the engine combustion chamber. Figures 4-6 show the fin 5 in its rest position. In this position, the fin 6 rests in contact with a portion of the inner surface of the duct 3 and, therefore, does not act on the flow of air passing along the axis A. Figure 6 shows in particular the section of the duct that is completely free and Figure 5 the fact that, in this rest position, the fin 6 is in a retracted position with respect to the cylinders 4. Figures 7-9 show the fin 6 in its maximum penetration working position in the duct 3. In this position, the front end 7 is raised and moved closer to the combustion chamber 4 so as to convey the flow entering the cylinders into the upper portion of the duct 3 (see especially Figure 9). In this example, it can be seen that the duct 3 is connected to two combustion chambers 4, where essentially upstream of the combustion chambers the intake duct 3 comprises bifurcation to split into two independent ducts 14. In this example, it can be seen that the first end 7 of the fin 6 comprises, in turn, a corresponding bifurcation so that in the working positions the same fin 6 acts at the bifurcation of the intake duct 3 on the flows passing through both channels 14.

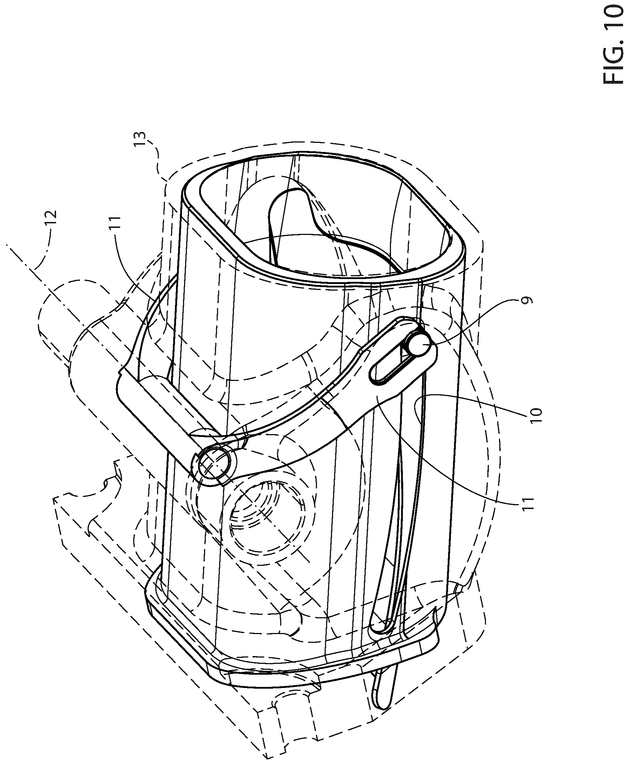

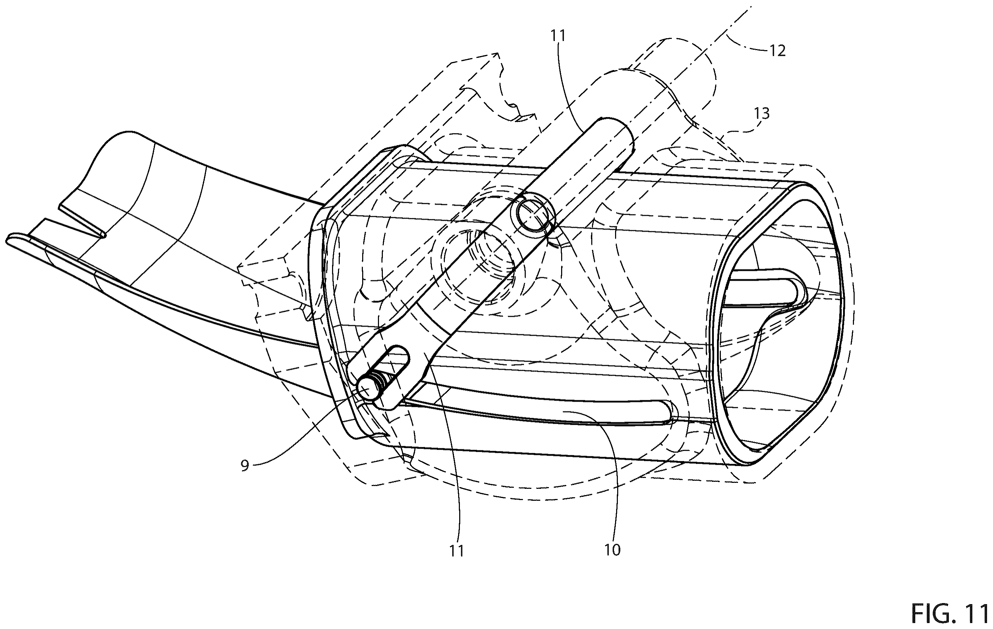

Finally, Figures 10 and 11 show an example of a mechanism for implementing the motion of the device in Figures 4-9. In this example, the fin 6 comprises two pins 9 arranged laterally on opposite sides that are housed in corresponding seats 10 formed in the intake duct 3. As shown, the seats 10 are slotted to allow motion of the pins 9 from a first end distal to the combustion chamber 4, wherein the fin 6 is in the rest position, to a second end proximal to the combustion chamber 4 wherein the fin 6 is in the position of maximum penetration into the intake duct 3. The motion of the pins 9 in the slots 10 is driven by two cranks 11 having a first end coupled to the pins 9 and a second end coupled to a common pivot shaft 12 (schematically depicted with just the rotation axis in the figures) with an axis parallel to the axis of the pins 9 so that the rotation of the shaft 12 generates the motion of the fin 6 with a connecting rod-crank kinematic motion. Finally, in Figures 10 and 11, reference number 13 identifies a sleeve covering the outside of the intake duct so as to avoid air leaks at the slots 10.

Lastly, it is clear that modifications may be made to the embodiments described and illustrated herein, and variations produced thereto, without departing from the scope of this invention, as set forth in the claims.

## Claims

1. A road vehicle (1) having an endothermic engine (2) comprising an air intake duct (3) for introducing air into at least one combustion chamber (4); wherein in the air intake duct (2) a device (5) is provided for selectively generating a tumble of air in the combustion chamber (4); **characterized in that** the device (5) for selectively generating a tumble consists of a single fin (6) arranged within the air intake duct (3); in which the fin (6) is shaped as a corresponding portion of the inner surface of the intake duct (3) and is movable between a rest position, in which it is substantially entirely in contact with the corresponding portion of the inner surface of the intake duct (3) and does not interfere with the flow of air passing through the intake duct (3), and a plurality of working positions in which it progressively penetrates the intake duct (3) to convey the flow of air passing through only at a portion of the intake duct (3).

2. The road vehicle as claimed in claim 1, wherein the fin (6) is shaped as a slide and comprises a first end (7) facing the combustion chamber (4) and an opposite second end (8); wherein in the rest position both ends (7, 8) are in contact with the corresponding portion of the inner surface of the intake duct (3) while in the working positions the first end (7) is inside the intake duct (3) and the second end (8) remains substantially in contact with the corresponding portion of the inner surface of the intake duct (3).

3. The road vehicle as claimed in claim 2, wherein in the working positions the first end of the fin (7) is raised in such a way as to direct air flow only to an upper portion of the intake duct (3).

4. The road vehicle as claimed in claim 3, wherein in the working positions the fin (6) gradually moves toward the combustion chamber (4) along the axis (A) of the intake duct (3).

5. The road vehicle as claimed in claim 4, wherein the fin (6) comprises two pins (9) arranged laterally on opposite sides housed in corresponding seats (10) formed in the intake duct (3), the seats (10) being slotted to allow motion of the pins (9) from a first end distal from the combustion chamber (4), wherein the fin (6) is in the rest position, to a second end proximal to the combustion chamber (4) wherein the fin (6) is in the position of maximum penetration into the intake duct (3).

6. The road vehicle as claimed in claim 5, wherein the motion of the pins (9) in the slots (10) is driven by two cranks (11) having a first end coupled to the pins (9) and a second end coupled to a common pivot shaft (12) with an axis parallel to the axis of the pins (9) so that the rotation of the shaft (12) generates the motion of the fin (6) with a connecting rod-crank kinematic motion.

7. The road vehicle as claimed in claim 6, wherein at the cranks (11) and pins (10) there is a sleeve (13) of external lining of the intake duct (3) so as to prevent air leakage.

8. The road vehicle as claimed in any one of the preceding claims, wherein there is provided a control unit configured to control the motion of the fin (6) from the rest position to a working position as a function of at least one engine operation parameter measured by a sensor in turn connected to the control unit.

9. The road vehicle as claimed in any one of the preceding claims, wherein there are provided two combustion chambers (4) connected to the intake duct (3), wherein substantially upstream of the combustion chambers the intake duct (3) comprises bifurcation to divide into two independent channels (14) connected to the combustion chambers (4); the first end (7) of the fin (6) comprising a corresponding bifurcation so that in the working positions the same fin (6) acts at the bifurcation of the intake duct (3) on the flows passing through both channels (14).
